# EUROPÄISCHE PATENTANMELDUNG

(11) **EP 4 703 216 A1**
(43) Veröffentlichungstag der Anmeldung: **04.03.2026**
(21) Anmeldenummer: 25190820.8
(22) Anmeldetag: 21.07.2025
(51) Int. Cl.: B60S 9/18

(54) **STÜTZRADBAUGRUPPE FÜR EINEN FAHRZEUGANHÄNGER SOWIE VERSTELLEINHEIT**

(30) Priorität: 27.08.2024 DE 202024104835 U
(71) Anmelder: Knott GmbH, D-83125 Eggstätt (DE)
(72) Erfinder: Strasser, Josef, 83257 Gstadt am Chiemsee (DE)
(74) Vertreter: Flach Bauer & Partner Patentanwälte mbB

(57) **Zusammenfassung**

Eine Stützradbaugruppe (20) für einen Fahrzeuganhänger (10) umfasst ein Stützrad (22) mit einem Außenrohr (26), einem Innenrohr (28), das mittels eines Hubmechanismus (30) des Stützrads (22) relativ zum Außenrohr (26) axial verschiebbar ist, und einem Rad (34), das an einem unteren axialen Ende des Innenrohrs (28) befestigt ist. Die Stützradbaugruppe 20 umfasst ferner eine elektrisch betreibbare Verstelleinheit (24), die an dem Außenrohr (26) des Stützrads (22) befestigt ist. Die Verstelleinheit (24) weist einen Elektromotor (36) sowie eine Energieversorgungseinrichtung (42) für den Elektromotor (36) auf. Der Elektromotor (36) ist mit dem Hubmechanismus (30) des Stützrads (22) wirkverbunden. Die Energieversorgungseinrichtung (42) weist eine Halterung (44) und eine Energiequelle (46) auf, die wiederholbar lösbar in die Halterung (44) eingesetzt ist.

Ferner ist eine elektrisch betreibbare Verstelleinheit (24) für eine derartige Stützradbaugruppe (20) für einen Fahrzeuganhänger mit einem Elektromotor (36) sowie einer Energieversorgungseinrichtung (42) für den Elektromotor (36) gezeigt.

## Beschreibung

Die Erfindung betrifft eine Stützradbaugruppe für einen Fahrzeuganhänger sowie eine Verstelleinheit.

Fahrzeuganhänger, insbesondere Pkw-Anhänger, sind grundlegend bekannt und kommen beispielsweise zum Transport von Gütern oder in Form von Pferde- oder Campinganhängern zum Einsatz.

Fahrzeuganhänger werden über eine Kupplung mit einem Zugfahrzeug verbunden, um von diesem gezogen zu werden. Sofern der Fahrzeuganhänger nicht an ein Zugfahrzeug gekoppelt ist, kommen meist Stützräder zum Einsatz, um den Fahrzeuganhänger, insbesondere eine Deichsel des Fahrzeuganhängers, auf einer vorbestimmten Höhe abzustützen.

Die Höhenverstellung des Stützrads erfolgt konventionell über eine Handkurbel, die auf das Stützrad aufgesetzt wird, wobei mittels der Handkurbel und eines mit der Handkurbel verbundenen Verstellmechanismus die Höhe des Stützrads verändern werden kann. Eine beispielhafte Ausgestaltung eines solchen Stützrads ist in der DE 20 2016 101 115 U1 beschrieben.

Diese händische Verstellmöglichkeit mittels einer Kurbel ist jedoch mit einem hohen körperlichen Aufwand für die Bedienperson des Fahrzeuganhängers verbunden, sodass ein Bedarf dafür besteht, die Höhenverstellung des Stützrads zu automatisieren.

Es ist die Aufgabe der Erfindung, eine Möglichkeit bereitzustellen, die Höhenverstellung eines Stützrades für einen Fahrzeuganhänger weiter zu automatisieren. Ferner soll die bereitzustellende Möglichkeit insbesondere kompatibel zu bereits bestehenden Fahrzeuganhängern und nachrüstbar sein.

Die Aufgabe der Erfindung wird gelöst durch eine Stützradbaugruppe für einen Fahrzeuganhänger. Die Stützradbaugruppe umfasst ein Stützrad mit einem Außenrohr, einem Innenrohr, das mittels eines Hubmechanismus des Stützrads relativ zum Außenrohr axial verschiebbar ist, und einem Rad, das an einem unteren axialen Ende des Innenrohrs befestigt ist. Die Stützradbaugruppe umfasst ferner eine elektrisch betreibbare Verstelleinheit, die an dem Außenrohr des Stützrads befestigt ist, wobei die Verstelleinheit einen Elektromotor sowie eine Energieversorgungseinrichtung für den Elektromotor aufweist. Der Elektromotor ist mit dem Hubmechanismus des Stützrads wirkverbunden und die Energieversorgungseinrichtung weist eine Halterung und eine Energiequelle auf, die wiederholbar lösbar, insbesondere werkzeugfrei lösbar in die Halterung eingesetzt ist.

Die Erfindung basiert auf dem Grundgedanken, die Höhe des Rads des Stützrads mittels eines Elektromotors verstellen zu können, sodass eine Bedienperson der Stützradbaugruppe nicht darauf angewiesen ist, auf eine mit Muskelkraft zu betreibende Betätigungsvorrichtung wie eine Handkurbel zurückzugreifen. Auf diese Weise wird die Bedienung des Stützrads bzw. der Stützradbaugruppe vereinfacht. Zugleich kann die Verstelleinheit auf bereits vorhandene Stützräder nachträglich montiert werden, sodass die Verstelleinheit als Nachrüstlösung eingesetzt werden kann.

Ferner verfügt die Verstelleinheit über eine integrierte Energieversorgungseinrichtung. Somit muss die Verstelleinheit nicht von einem Zugfahrzeug, an das der Fahrzeuganhänger angeschlossen wird, oder vom Fahrzeuganhänger selbst mit Strom versorgt werden, um die Höhe des Rads des Stützrads verstellen zu können. Dies ermöglicht es einerseits, dass das Rad bereits verstellt werden kann, bevor das Zugfahrzeug an den Fahrzeuganhänger angekoppelt wurde und sich insbesondere außerhalb einer zur Verfügung stehenden Kabelreichweite befindet. Andererseits kann vermieden werden, dass das Stützrad nach einer längeren Standzeit des Fahrzeuganhängers, in der sich eine Batterie des Fahrzeuganhängers entladen hat oder einen unbekannten Ladezustand aufweist, nicht mehr verstellt werden kann.

Dadurch, dass die Energiequelle der Energieversorgungseinrichtung werkzeugfrei, und somit insbesondere zerstörungsfrei, lösbar aus der Halterung entnommen werden kann, ist ein schneller und einfacher Wechsel der Energiequelle möglich. Insbesondere kann die Energiequelle entnommen werden, wenn die Verstelleinheit gerade nicht betrieben werden muss. Dies ermöglicht es, die Energiequelle auf einfache Weise zu laden und/oder für andere Einsatzzwecke zu benutzen, wenn die Verstelleinheit gerade nicht benötigt wird. Zudem erhöht sich die Sicherheit der Stützradbaugruppe, da die Verstelleinheit nicht mehr von der Energiequelle angetrieben werden kann, wenn die Energiequelle aus der Halterung entfernt ist. Auf diese Weise können unbeabsichtigte Verstellvorgänge des Stützrads vermieden werden, beispielsweise während einer Fahrt.

Der Begriff "wirkverbunden" bedeutet im Zusammenhang mit der vorliegenden Erfindung, dass der Elektromotor dazu eingerichtet ist, den Hubmechanismus zu betätigen und somit die Relativbewegung von Innenrohr und Außenrohr zu bewirken. Die Bewegung des Innenrohrs führt zu einer axialen Bewegung des am Innenrohr befestigten Rads, sodass die Position des Rads über den Elektromotor einstellbar ist.

Der Elektromotor ist drehmomentübertragend mit dem Hubmechanismus verbunden, beispielsweise einer Gewindespindel des Hubmechanismus.

Die Art der Befestigung der Verstelleinheit am Außenrohr des Stützrads ist grundlegend nicht weiter eingeschränkt, solange der Elektromotor und der Hubmechanismus wirkverbunden sind. Beispielsweise ist die Verstelleinheit auf das Außenrohr aufgesteckt. Auf diese Weise ergibt sich eine besonders gut zugängliche Montagerichtung und ein einfacher Montageprozess.

Die Energiequelle ist dazu eingerichtet, den Elektromotor mit elektrischer Energie zu versorgen, wenn die Energiequelle in die Halterung eingesetzt ist. Anders ausgedrückt ist die Energiequelle elektrisch mit dem Elektromotor verbunden, wenn die Energiequelle in die Halterung eingesetzt ist.

Die Energiequelle kann ein Akkumulator sein, sodass die Energiequelle wieder aufladbar ist. Dadurch, dass die Energiequelle wiederholbar, insbesondere werkzeugfrei lösbar in der Halterung eingesetzt ist, kann der Akkumulator auf einfache Weise entnommen, geladen und anschließend wieder eingesetzt werden.

Insbesondere ist der Akkumulator ein Akkumulator für ein batteriebetriebenes Werkzeug, beispielsweise Bohrmaschinen oder Gartenwerkzeug (Heckenschere). Dies ermöglicht es, dass der gleiche Akkumulator, mit dem die Verstelleinheit betrieben wird, für andere Zwecke genutzt werden kann, wenn das Stützrad nicht verstellt werden muss. Auf diese Weise reduziert sich die Anzahl der von der Bedienperson mitzuführenden Akkumulatoren und die Kosten für die Energiequelle werden gesenkt.

Der Akkumulator weist beispielsweise eine Spannung im Bereich von 12 bis 42 Volt auf, insbesondere von 12 bis 18 Volt.

Um die Kompatibilität des Akkumulators mit weiteren batteriebetriebenen Werkzeugen zu erhöhen, kann der Akkumulator ein genormter Akkumulator sein, beispielsweise ein Akkumulator gemäß dem "18V Cordless Alliance System", der "Power for All Alliance" oder der "AmpShare"-Norm.

Der Elektromotor kann insbesondere nur über die Energieversorgungseinrichtung mit elektrischer Energie versorgt sein. Dies erhöht die Sicherheit der Stützradbaugruppe, da das Stützrad nur mittels des Elektromotors verstellt werden kann, wenn die Energiequelle in die Halterung eingesetzt ist. Somit ergibt sich eine besonders zuverlässige "Aus"-Funktion der Verstelleinheit, wenn die Energiequelle entnommen ist. Auf diese Weise kann besonders effektiv vermieden werden, dass die Höhe des Stützrads zu einem Zeitpunkt verstellt wird, an dem dies nicht erwünscht ist, beispielsweise während einer Fahrt.

Ferner kann die Verstelleinheit frei von drahtlosen Kommunikationsschnittstellen sein. Auch auf diese Weise kann eine unerwünschte Aktivierung der Verstelleinheit vermieden werden, da die Verstelleinheit nicht versehentlich aus der Ferne aktiviert und betrieben werden kann, sodass sich eine besonders sichere Stützradbaugruppe ergibt.

Die Verstelleinheit kann ein Motorgehäuse aufweisen, in dem der Elektromotor aufgenommen ist, wobei am Motorgehäuse eine Bedienschnittstelle für den Elektromotor angebracht ist. Auf diese Weise kann der Elektromotor auf einfache und zugängliche Weise von einer Bedienperson gesteuert und somit die Höhe des Stützrads von der Bedienperson verändert werden.

Die Art der Bedienschnittstelle ist grundlegend nicht weiter eingeschränkt. Beispielsweise ist die Bedienschnittstelle in Form von einem oder mehreren Tastern ausgestaltet. Auf diese Weise ergibt sich eine besonders einfache Bedienschnittstelle, die zudem widerstandsfähig gegenüber Umwelteinflüssen ist, denen Fahrzeuganhänger häufig ausgesetzt sind, wie Sonneneinstrahlung und Feuchtigkeit.

Um die Energiequelle besonders einfach in die Halterung einsetzen und aus dieser entnehmen zu können, kann die Halterung am Außenrohr des Stützrads anliegen und die Energiequelle an einer vom Außenrohr abgewandten Seitenfläche der Halterung eingesetzt sein, insbesondere eingeschoben sein.

Die Halterung kann mehrere Kontakte aufweisen, die elektrisch mit dem Elektromotor verbunden sind, und die Energiequelle kann mehrere Kontakte aufweisen, wobei die Kontakte der Energiequelle mit den Kontakten der Halterung in physischem Kontakt stehen, wenn die Energiequelle in der Halterung eingesetzt ist. Dadurch ist eine zuverlässige und einfach zu bedienende Kontaktierung zwischen Energiequelle und Elektromotor gewährleistet.

Die Verstelleinheit kann ein Befestigungselement umfassen, das an dem Außenrohr befestigt ist, wobei der Elektromotor an dem Befestigungselement abgestützt ist. Auf diese Weise werden unerwünschte Bewegungen der Verstelleinheit vermieden oder zumindest verringert, wenn der Elektromotor betrieben wird.

Der Elektromotor ist insbesondere indirekt über das Motorgehäuse an dem Befestigungselement abgestützt, beispielsweise über einen Vorsprung des Motorgehäuses, der auf dem Befestigungselement aufliegt.

Die Halterung der Energieversorgungseinrichtung ist insbesondere direkt am Außenrohr befestigt und nicht über das Befestigungselement.

Die Halterung kann separat vom Motorgehäuse ausgebildet sein, wobei die Halterung und das Motorgehäuse miteinander verbunden sind, beispielsweise über eine Kabelverbindung, insbesondere eine Kabelverbindung innerhalb einer Kabelführung.

Das Befestigungselement kann auf das Außenrohr geklemmt sein. Dies ermöglicht eine besonders einfache Montage des Befestigungselements bei zugleich sicherer Fixierung des Befestigungselements am Außenrohr.

Der Elektromotor kann Teil einer Motor-Getriebeeinheit der Verstelleinheit sein, die den Elektromotor und ein Freilaufgetriebe aufweist, wobei der Elektromotor des Freilaufgetriebes mit dem Hubmechanismus wirkverbunden ist. Das Freilaufgetriebe stellt sicher, dass die Drehmomentübertragung zwischen Elektromotor und Hubmechanismus nur bei Rotation in einer Vorzugsrichtung stattfinden kann.

In einer Variante weist der Hubmechanismus eine Gewindespindel mit einer Gewindestange und einer Spindelmutter auf, wobei die Gewindestange drehmomentübertragend mit dem Elektromotor und/oder die Spindelmutter mit dem Innenrohr verbunden ist. Eine Gewindespindel stellt eine besonders kompakte und zuverlässige Möglichkeit bereit, das vom Elektromotor erzeugte Drehmoment in eine Linearbewegung des Innenrohrs zu übersetzen. Zudem sind entsprechende Hubmechanismen mit Gewindespindeln in handelsüblichen Stützrädern oftmals bereits vorhanden, sodass die Verstelleinheit auf einfache Weise nachgerüstet werden kann, um zu einer erfindungsgemäßen Stützradbaugruppe zu gelangen.

Die Verstelleinheit kann eine Verlängerungswelle aufweisen, die drehmomentübertragend mit dem Elektromotor verbunden ist. Insbesondere erstreckt sich die Verlängerungswelle axial durch den Elektromotor. Auf diese Weise ergeben sich besonders kompakte Abmessungen der Verstelleinheit.

Die Gewindestange ragt insbesondere an einem oberen axialen Ende des Innenrohrs aus dem Innenrohr heraus und die Verlängerungswelle ist insbesondere drehmomentübertragend mit der Gewindestange verbunden. Beispielsweise ragt das Innenrohr mit einem Anschlussstück aus dem Innenrohr heraus, an dem die Verlängerungswelle direkt befestigt ist. Auf diese Weise wird das Anbringen der Verlängerungswelle an der Gewindestange weiter vereinfacht. Zudem wird es noch einfacher, die Verstelleinheit auf bestehende Stützräder nachzurüsten, da die Verlängerungswelle den zum Anbringen des Elektromotors benötigten Bauraum oberhalb der Gewindestange zur Verfügung stellen kann.

Die Gewindestange ist insbesondere am unteren axialen Ende der Verlängerungswelle mit der Verlängerungswelle drehmomentübertragend verbunden.

Um die Verbindung zwischen Verlängerungswelle und Gewindestange auf besonders einfache und zuverlässige Weise zu realisieren, kann die Verlängerungswelle mit der Gewindestange über eine erste Spannhülse drehmomentübertragend verbunden sein. Spannhülsen ermöglichen eine besonders einfache Montage und stellen zugleich eine sichere Fixierung bereit, insbesondere im Hinblick auf im Betrieb eines Fahrzeuganhängers zu erwartenden Vibrationen und Stößen.

Der Elektromotor wiederum kann über eine zweite Spannhülse mit der Verlängerungswelle verbunden sein.

Die zweite Spannhülse ist beispielsweise auf einem umlaufenden Vorsprung der Verlängerungswelle an einem dem Anschlussstück zugeordneten axialen Ende der Verlängerungswelle aufgesetzt.

Die Verlängerungswelle kann ein oberes axiales Ende aufweisen, das als Adapterstück ausgebildet ist, insbesondere wobei eine manuelle Betätigungsvorrichtung zur Betätigung des Hubmechanismus drehmomentübertragend am Adapterstück befestigt ist. Auf diese Weise ist ein Notfallbetrieb der Stützradbaugruppe möglich, in dem die Höhe des Stützrads konventionell über die Betätigungsvorrichtung manuell verstellbar ist, also ohne Unterstützung des Elektromotors. Dies ist insbesondere von Vorteil, wenn die Energiequelle nicht zur Verfügung steht oder keinen zum Betreiben des Elektromotors notwendigen Ladezustand mehr aufweist.

Um eine einfache Montage der Betätigungsvorrichtung zu ermöglichen, kann das Adapterstück oberhalb des Elektromotors angeordnet sein.

Eine Kurbel kann als Betätigungsvorrichtung auf das Adapterstück aufgesetzt sein, um die Kurbel drehmomentübertragend mit dem Hubmechanismus zu verbinden. Insbesondere ist die Kurbel in Kombination mit der zuvor beschriebenen Motor-Getriebeeinheit vorgesehen, die ein Freilaufgetriebe hat, um eine Vorzugsrichtung der Kurbelbewegung zu definieren.

Die Kurbel kann zerstörungsfrei lösbar, insbesondere werkzeugfrei lösbar, mittels einer dritten Spannhülse, oder mittels eines Rastmechanismus mit dem Adapterstück drehmomentübertragend verbunden sein.

Auch ist es möglich, dass die Stützradbaugruppe eine Stützradbaugruppe für einen Fahrzeuganhänger mit einem anhängerseitigen Stecker zur Herstellung einer elektrischen Verbindung mit einem Zugfahrzeug ist und das Adapterstück als Anschlussbuchse für den anhängerseitigen Stecker ist. Auf diese Weise kann die Stützradbaugruppe auch dann als Nachrüstlösung in Einsatzszenarien genutzt werden, in denen eine elektrische Verbindung zwischen dem angedachten Zugfahrzeug und dem Fahrzeuganhänger über die Stützradbaugruppe gewünscht ist, beispielsweise um elektrische Verbraucher im Fahrzeuganhänger über das Zugfahrzeug mit elektrischer Energie zu versorgen.

Beispielsweise ist das Adapterstück als Anschlussbuchse gemäß einem System wie in der EP 2 161 145 B1 beschrieben ausgestaltet.

Es versteht sich jedoch, dass auch in dieser Variante trotz der elektrischen Verbindung zwischen Zugfahrzeug und Fahrzeuganhänger der Elektromotor insbesondere nicht über das Zugfahrzeug und/oder den Fahrzeuganhänger mit elektrischer Energie versorgt wird, sondern über die in die Halterung eingesetzte Energiequelle der Energieversorgungseinrichtung der Stützradbaugruppe.

Ferner wird die Aufgabe gelöst durch eine elektrisch betreibbare Verstelleinheit für eine Stützradbaugruppe für einen Fahrzeuganhänger wie zuvor beschrieben. Die Verstelleinheit hat einen Elektromotor sowie eine Energieversorgungseinrichtung für den Elektromotor.

Die zur Stützradbaugruppe beschriebenen Merkmale und Vorteile gelten gleichermaßen für die Verstelleinheit und umgekehrt.

Weitere Merkmale und Eigenschaften der Erfindung ergeben sich aus der nachfolgenden Beschreibung beispielhafter Ausführungsformen, die nicht ein einem einschränkenden Sinn verstanden werden sollen, sowie den Zeichnungen. In diesen zeigen:
- Fig. 1: einen Fahrzeuganhänger mit einer erfindungsgemäßen Stützradbaugruppe mit einer erfindungsgemäßen Verstelleinheit,
- Fig. 2: eine Teilansicht des Fahrzeuganhängers aus Fig. 1,
- Fig. 3: eine größere, isolierte Darstellung der erfindungsgemäßen Stützradbaugruppe aus Fig. 1,
- Fig. 4: eine Darstellung ausgewählter Teile der Stützradbaugruppe aus Fig. 3,
- Fig. 5: eine weitere Darstellung ausgewählter Teile der Stützradbaugruppe aus Fig. 3,
- Fig. 6: eine Energiequelle der Stützradbaugruppe aus Fig. 3,
- Fig. 7: ein Detail Y der Darstellung aus Fig. 5,
- Fig. 8: eine Schnittansicht der Stützradbaugruppe aus Fig. 3, und
- Fig. 9: eine vergrößerte Darstellung eines Teilbereichs der Schnittansicht aus Fig. 8.

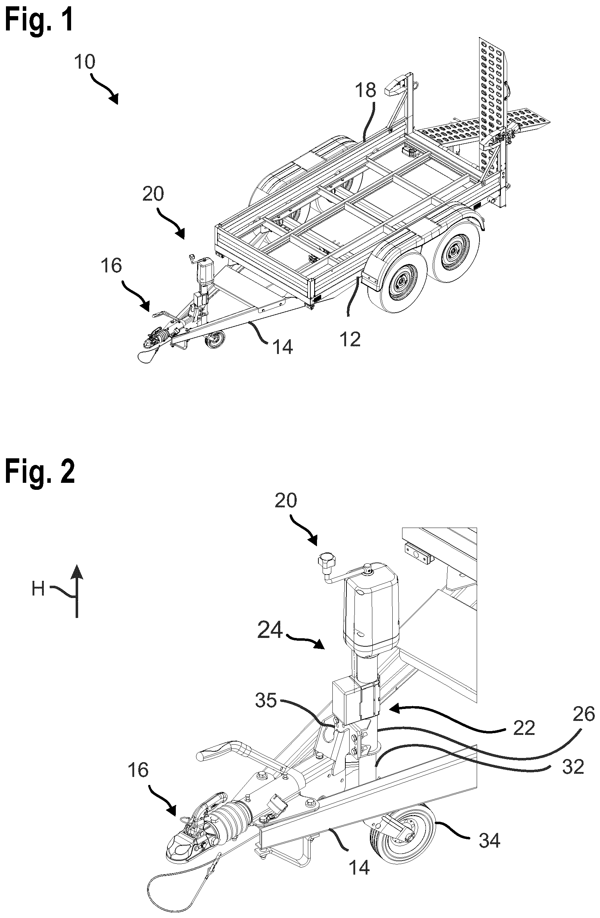

Fig. 1 zeigt eine perspektivische Darstellung eines Fahrzeuganhängers 10, der einen Tragrahmen 12 und eine in einem Frontbereich des Fahrzeuganhängers 10 angeordnete Deichsel 14 aufweist. Der Tragrahmen 12 und die Deichsel 14 sind derart miteinander verbunden, dass der Fahrzeuganhänger 10 mittels eines (nicht dargestellten) Zugfahrzeugs gezogen werden kann, das über eine Kupplung 16 mit der Deichsel 14 verbunden ist.

Der Tragrahmen 12 ist mit einem Aufbau 18 versehen, der an die angedachte Funktion des Fahrzeuganhängers 10 angepasst ist. Es versteht sich, dass die Art des Fahrzeuganhängers 10 bzw. des Aufbaus 18 nicht näher eingeschränkt ist.

An der Deichsel 14 ist eine erfindungsgemäße Stützradbaugruppe 20 befestigt, die in Fig. 2 in einer vergrößerten Darstellung gezeigt ist und ein Stützrad 22 sowie eine elektrisch betreibbare Verstelleinheit 24 umfasst.

Das Stützrad 22 verfügt über ein Außenrohr 26, das sich in Einbauposition axial entlang einer Höhenrichtung H des Fahrzeuganhängers 10 erstreckt.

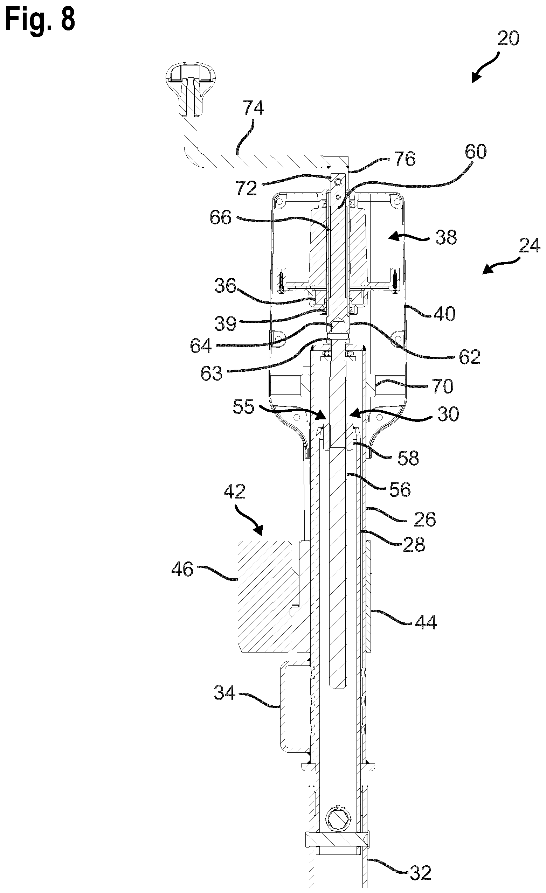

Innerhalb des Außenrohrs 26 ist koaxial zum Außenrohr 26 ein Innenrohr 28 angeordnet, das relativ zum Außenrohr 26 mittels eines Hubmechanismus 30 verschiebbar ist (vgl. Fig. 8), wie später noch näher beschrieben werden wird.

An einem axial unteren Ende des Innenrohrs 28 ist über ein Verbindungsstück 32 ein Rad 34 befestigt.

Die Begriffe "oben" und "unten" bzw. "oberes" und "unteres" beziehen sich hier und im Folgenden auf die Einbauposition der Stützradbaugruppe 20 und bezeichnen Positionen entlang der Höhenrichtung H. Anders ausgedrückt befindet sich ein "oberes" Bauteil geodätisch höher als ein in Relation zu diesem Bauteil befindliches "unteres" Bauteil.

Durch die relative Position von Außenrohr 26 und Innenrohr 28 ist die Lage des Rads 34 entlang der Höhenrichtung H verstellbar. Auf diese Weise kann das Rad 34 verfahren werden, beispielsweise in eine Stützposition, in der das Rad 34 in Kontakt mit dem Boden steht und auf diese Weise den Fahrzeuganhänger 10 abstützt (wie in Fig. 1 und 2 angedeutet ist), oder in eine Halteposition, in der das Rad 34 nach oben verfahren ist und keinen Kontakt mehr zum Boden hat.

Das Stützrad 22 verfügt über eine Fixiervorrichtung 35, die mit dem Außenrohr 26 verbunden ist, beispielsweise verschweißt, und über die das Stützrad 22 und somit die Stützradbaugruppe 20 mit der Kupplung 16 und der Deichsel 14 verbunden ist.

In der gezeigten Ausführungsform ist die Fixiervorrichtung 35 mit der Kupplung 16 verschraubt.

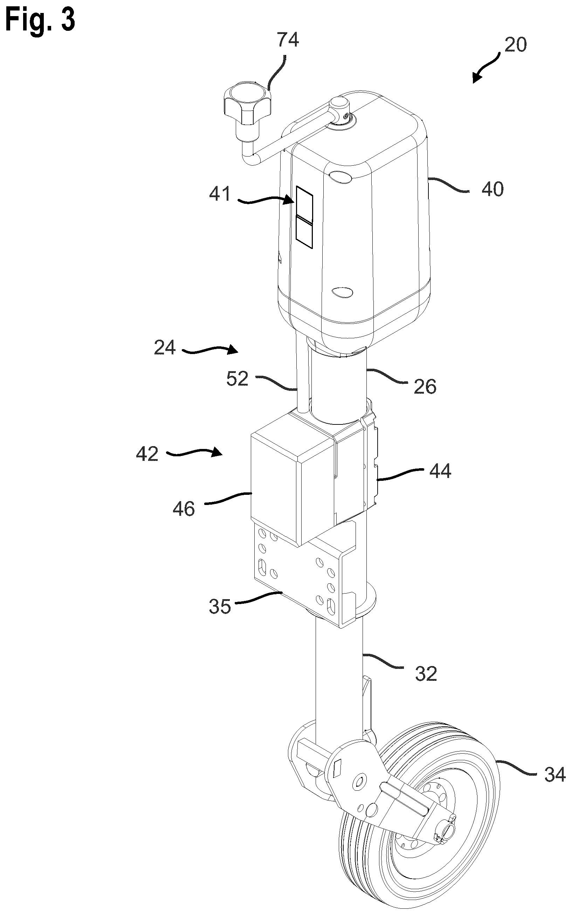

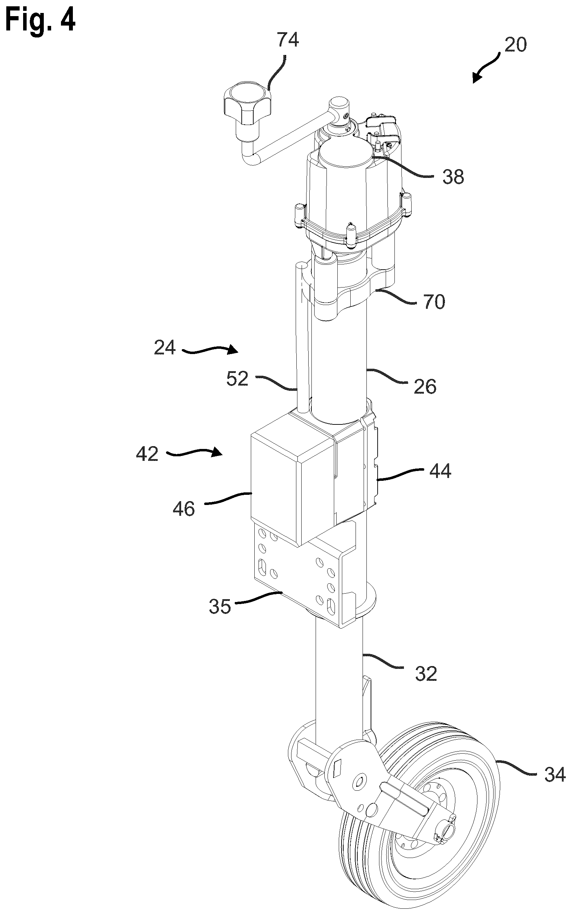

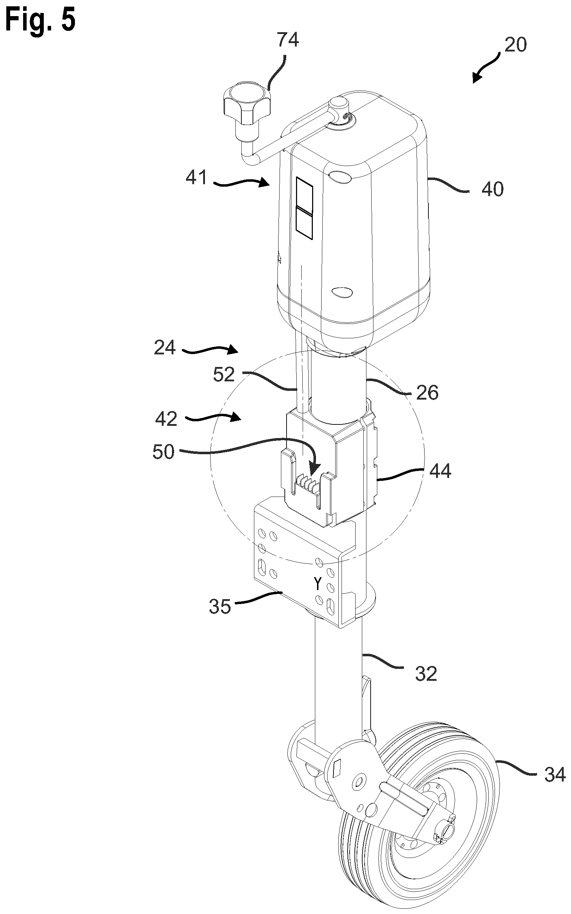

Fig. 3 zeigt eine größere Darstellung der Stützradbaugruppe 20, in der der besseren Übersichtlichkeit halber die Komponenten des Fahrzeuganhängers 10 nicht dargestellt sind. Fig. 4 und 5 zeigen eine weitere Darstellung der Stützradbaugruppe 20, wobei in der Fig. 4 ein Motorgehäuse 40 nicht dargestellt ist.

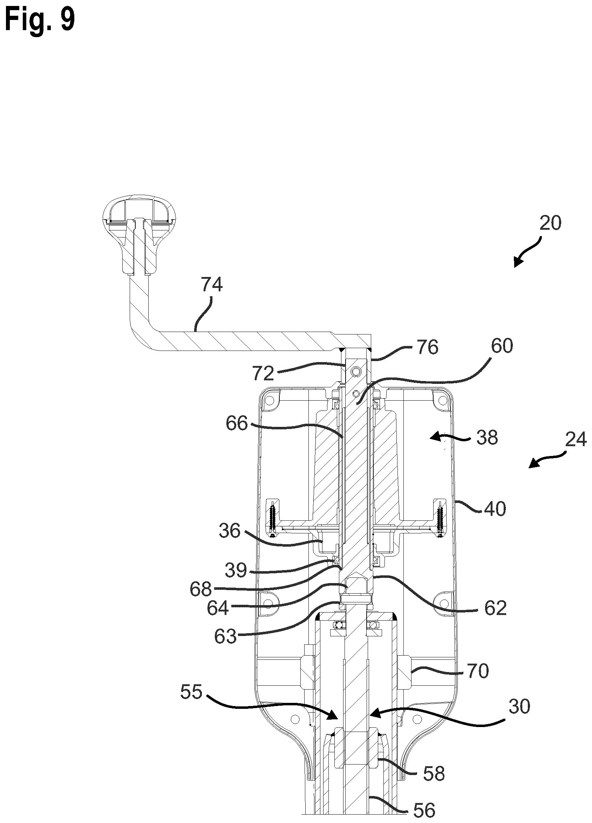

Die Verstelleinheit 24 verfügt über einen Elektromotor 36, der in der gezeigten Ausführungsform Teil einer Motor-Getriebeeinheit 38 ist, die den Elektromotor 36 sowie ein Freilaufgetriebe 39 umfasst (vgl. Fig. 4 und 9). Der Elektromotor 36 ist mit dem Hubmechanismus 30 wirkverbunden, wie später nach genauer beschrieben werden wird, sodass die Position des Rads 34 mittels des Elektromotors 36 verändert bzw. gesteuert werden kann.

Der Elektromotor 36 ist in einem Motorgehäuse 40 aufgenommen, das in Form zweier Halbschalen ausgebildet ist, die senkrecht zur Höhenrichtung H ineinandergesteckt sind.

Am Motorgehäuse 40 ist eine Bedienschnittstelle 41 vorgesehen, die beispielsweise als Taster ausgestaltet ist und über die eine Bedienperson der Stützradbaugruppe 20 den Elektromotor und damit die Position des Rads 32 steuern kann.

Insbesondere ist die Verstelleinheit 24 frei von drahtlosen Kommunikationsschnittstellen, sodass eine Aktivierung des Elektromotors 36 nur unmittelbar an der Bedienschnittstelle 41 erfolgen kann.

Die Verstelleinheit 24 weist ferner eine Energieversorgungseinrichtung 42 auf, die eine Halterung 44 und eine Energiequelle 46 umfasst, die wiederholbar werkzeugfrei lösbar in der Halterung 44 eingesetzt ist.

Die Halterung 44 ist beispielsweise separat vom Elektromotor 36 und dem Motorgehäuse 40 ausgeführt und getrennt hiervon am Außenrohr 26 befestigt.

Bei der Energiequelle 46 handelt es sich um einen Akkumulator, der insbesondere ein Akkumulator für ein batteriebetriebenes Elektrowerkzeug wie einen Akkuschrauber oder eine Bohrmaschine ist.

Der Akkumulator weist eine Spannung im Bereich von 12 bis 42 V auf, beispielsweise von 18 V und kann ein genormter Akkumulator sein.

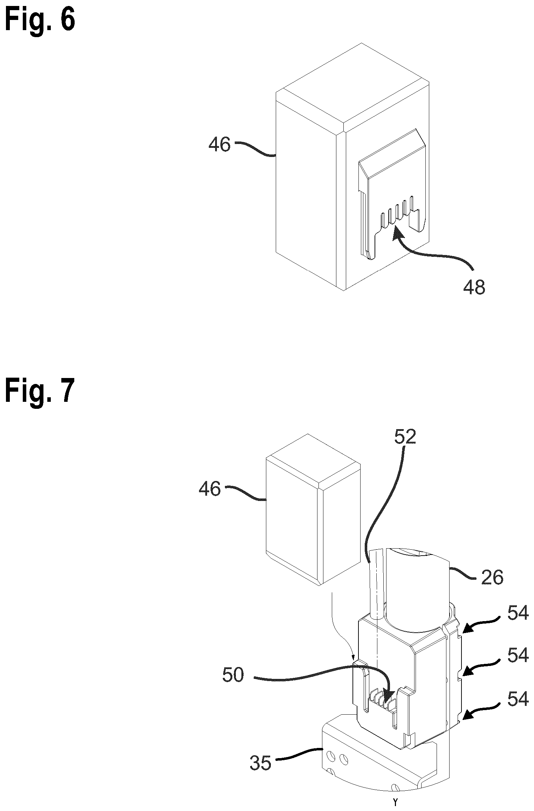

Wie in den Figuren 6 und 7 zu erkennen, verfügt die Energiequelle 46 an einer Seitenfläche der Energiequelle 46 über mehrere Kontakte 48, die komplementär zu Kontakten 50 der Halterung 44 ausgebildet sind. Die Energiequelle 46 kann in die Halterung 44 durch eine Bewegung entgegen der Höhenrichtung H eingeschoben und auf diese Weise mit dieser verbunden werden, wobei die Kontakte 48 und 50 miteinander physisch in Kontakt treten und eine elektrische Verbindung zwischen Energiequelle 46 und Halterung 44 herstellen.

Die Kontakte 50 der Halterung 44 wiederum sind elektrisch mit dem Elektromotor 36 verbunden, beispielsweise über eine Kabelverbindung, die innerhalb einer Kabelführung 52 geführt ist, die sich entlang der Höhenrichtung H zwischen der Halterung 44 und der Motor-Getriebeeinheit 38 erstreckt.

Somit ist eine elektrische Verbindung zwischen der Energiequelle 46 und dem Elektromotor 36 hergestellt, wenn die Energiequelle 46 in die Halterung 44 eingesetzt ist. Insbesondere ist die Energiequelle 46 die einzige Energiequelle zum Betreiben des Elektromotors 36, sodass sichergestellt ist, dass der Elektromotor 36 nicht betrieben werden kann, wenn die Energiequelle 46 aus der Halterung 44 entnommen ist.

Die Halterung 44 umschließt das Außenrohr 26 und ist an diesem befestigt. Beispielsweise kann die Halterung 44 zusammen mit der Motor-Getriebeeinheit 38 auf das Außenrohr 26 aufgeschoben und auf der gewünschten Höhe fixiert werden.

Die Fixierung der Halterung 44 kann über eine Fixierung der Motor-Getriebeeinheit 38 erfolgen, da die Halterung 44 über die Kabelführung 52 mit dieser verbunden ist.

Auch ist es möglich, dass die Halterung 44 alternativ oder zusätzlich dazu an das Außenrohr 26 geklemmt ist, beispielsweise mittels einer Schraubverbindung, deren Einsatzöffnung 54 in Fig. 7 angedeutet sind.

Fig. 8 zeigt eine Schnittansicht durch die Stützradbaugruppe 20, in der weitere Komponenten der Stützradbaugruppe 20 und deren Zusammenwirken zu erkennen sind.

Der Hubmechanismus 30 verfügt über eine Gewindespindel 55, die eine Gewindestange 56 sowie eine auf die Gewindestange 56 aufgesetzte Spindelmutter 58 aufweist.

Die Spindelmutter 58 ist mit dem Innenrohr 28 des Stützrads 22 verbunden, sodass eine Bewegung der Spindelmutter 58 entlang oder entgegen der Höhenrichtung H in einer entsprechenden Bewegung des Innenrohrs 28 resultiert.

Die Gewindestange 56 ist mit dem Elektromotor 36 drehmomentübertragend übertragen, sodass die Gewindestange 56 mittels des Elektromotors 36 rotiert werden kann.

Zu diesem Zweck verfügt in der gezeigten Ausführungsform die Verstelleinheit 24 über eine Verlängerungswelle 60, die an ihrem unteren axialen Ende eine erste Spannhülse 62 aufweist, mittels der die Verlängerungswelle 60 drehmomentübertragend mit der Gewindestange 56 des der Gewindespindel 55, also mit dem Hubmechanismus 30, verbunden ist.

Ferner sind die Verlängerungswelle 60 und die Gewindestange 56 über ein senkrecht zur Höhenrichtung H verlaufendes Sicherungselement 63 verbunden, das in der gezeigten Ausführungsform als Sicherungsbolzen ausgestaltet ist.

Um die Gewindestange 56 mit der Verlängerungswelle 60 zu verbinden, ragt die Gewindestange 56 in der gezeigten Ausführungsform mit einem Anschlussstück 64 nach oben aus dem Innenrohr 28 heraus, sodass das Anschlussstück 64 in die erste Spannhülse 62 eingreift.

Der Elektromotor 36 ist über eine zweite Spannhülse 66 mit der Verlängerungswelle 60 drehmomentübertragend verbunden.

Wie in der vergrößerten Darstellung der Schnittansicht durch die Stützradbaugruppe 20 in Fig. 9 noch besser zu erkennen ist, ist die zweite Spannhülse 66 auf einem umlaufenden Vorsprung 68 der Verlängerungswelle 60 aufgesetzt. Der umlaufende Vorsprung 68 ist dem unteren axialen Ende der Verlängerungswelle 60 zugeordnet, also demjenigen Ende der Verlängerungswelle 60, das in die erste Spannhülse 62 übergeht.

Ferner erstreckt sich die Verlängerungswelle 60 entlang der Höhenrichtung H axial durch die Motor-Getriebeeinheit 38 und den Elektromotor 36 hindurch. Auf diese Weise ergibt sich eine besonders kompakte Anordnung aus Verlängerungswelle 60 und Motor-Getriebeeinheit 38.

Die Verstelleinheit 24 verfügt ferner über ein Befestigungselement 70, das an dem Außenrohr 26 befestigt ist, in der gezeigten Ausführungsform nämlich auf das Außenrohr 26 aufgeklemmt ist, und als Stütze für die Motor-Getriebeeinheit 38 dient.

Im Folgenden wird die Funktionsweise der Stützradbaugruppe 20 näher beschrieben.

Beispielsweise befindet sich das Rad 34 zunächst in seiner Stützposition, in der das Rad 34 den Fahrzeuganhänger 10 abstützt (vgl. Fig. 1).

Soll der Fahrzeuganhänger 10 bewegt werden, beispielsweise nachdem ein Zugfahrzeug über die Kupplung 16 an den Fahrzeuganhänger 10 angeschlossen wurde, setzt die Bedienperson der Stützradbaugruppe 20 die Energiequelle 46 in die Halterung 44 ein, sodass die Motor-Getriebeeinheit 38, speziell der Elektromotor 36, von der Energiequelle 46 mit elektrischer Energie versorgt werden kann.

Selbstredend ist es auch möglich, dass die Energiequelle 46 bereits in der Halterung 44 eingesetzt ist.

Anschließend wird das Rad 34 aus seiner Stützposition in deine Halteposition verfahren, nachdem die Bedienperson eine entsprechende Schaltfläche bzw. einen entsprechenden Taster an der Bedienschnittstelle 41 betätigt hat. Dazu wird vom Elektromotor 36 ein Drehmoment erzeugt, das mittels der zweiten Spannhülse 66 auf die Verlängerungswelle 60 übertragen wird.

Die Verlängerungswelle 60 überträgt wiederum über die erste Spannhülse 62 das Drehmoment auf die Gewindestange 56 des Hubmechanismus 30. Durch die resultierende Drehbewegung der Gewindestange 56 verändert sich die Position der Spindelmutter 58 auf der Gewindestange 56 derart, dass die Spindelmutter 58 entlang der Höhenrichtung H verfährt.

Durch die Bewegung der Spindelmutter 58 hebt sich das Innenrohr 28 an, verfährt also relativ zum Außenrohr 26, sodass das Rad 34 bis zur Halteposition angehoben wird.

Anschließend kann die Energiequelle 46 aus der Halterung 44 entfernt werden, um ein unbeabsichtigtes Absenken des Rads 34 zu unterbinden.

Sofern das Rad 34 wieder in die Stützposition verfahren werden soll, werden die zuvor beschriebenen Schritte in umgekehrter Reihenfolge durchgeführt.

Es versteht sich, dass dieser Ablauf für die in den Figuren gezeigte Ausgestaltung des Hubmechanismus 30 mit einer Gewindespindel 55 beschrieben ist. Sofern eine andere Art von Hubmechanismus 30 zum Einsatz kommt, gelten die vorherigen Ausführungen analog.

In der gezeigten Ausführungsform verfügt die Verlängerungswelle 60 über ein oberes axiales Ende, das als Adapterstück 72 ausgebildet ist und nach oben aus dem Motorgehäuse 40 herausragt.

Am Adapterstück 72 ist eine manuelle Betätigungsvorrichtung 74 angebracht, die in der gezeigten Ausführungsform als Kurbel ausgestaltet ist. Auf diese Weise ist die Betätigungsvorrichtung 74 drehmomentübertragend mit dem Hubmechanismus 30 verbunden.

Die Verbindung zwischen Kurbel und Adapterstück 72 erfolgt über eine dritte Spannhülse 76 oder mittels eines Rastmechanismus und ist zerstörungsfrei wiederholbar lösbar ausgestaltet, insbesondere werkzeugfrei lösbar ausgestaltet.

Die Betätigungsvorrichtung 74 stellt eine zusätzliche manuelle Möglichkeit dafür bereit, die Position des Rads 34 einzustellen. Anders ausgedrückt kann mittels der Betätigungsvorrichtung 74 der Hubmechanismus 30 von der Bedienperson betätigt werden, selbst wenn der Elektromotor 36 nicht einsatzbereit ist, beispielsweise aufgrund eines Defekts, einer fehlenden Energiequelle 46 oder einer nicht mehr ausreichend geladenen Energiequelle 46.

Grundlegend ist die Betätigungsvorrichtung 74 jedoch optional, sodass auf diese auch verzichtet werden kann, wenn ein ausschließlich elektrischer Betrieb des Hubmechanismus 30 durch den Elektromotor 36 gewünscht ist.

Es ist auch möglich, dass das Adapterstück 72 in Form einer Anschlussbuchse für einen (nicht dargestellten) anhängerseitigen Stecker ausgebildet ist, analog zur in der EP 2 161 145 B1 beschriebenen Ausgestaltung. Auf diese Weise kann die Stützradbaugruppe 20 derart ausgestaltet sein, dass - zusätzlich zur Verstellfunktion des Rads 34 - über die Stützradbaugruppe 20 eine elektrische Verbindung zwischen einem Zugfahrzeug und elektrischen Verbrauchern des Fahrzeuganhängers bereitgestellt ist.

Insgesamt zeichnet sich die erfindungsgemäße Stützradbaugruppe durch eine einfach zu bedienende und automatisierbare Verstellmöglichkeit aus, sodass auf den Einsatz von manuellen Verstellvorgängen verzichtet oder weitestgehend verzichtet werden kann. Ferner eignet sich die Stützbaugruppe dazu, auf bestehende Stützräder durch Anbringen der Verstelleinheit als Nachrüstlösung installiert zu werden.

## Patentansprüche

1. Stützradbaugruppe (20) für einen Fahrzeuganhänger (10), umfassend
ein Stützrad (22) mit einem Außenrohr (26), einem Innenrohr (28), das mittels eines Hubmechanismus (30) des Stützrads (22) relativ zum Außenrohr (26) axial verschiebbar ist, und einem Rad (34), das an einem unteren axialen Ende des Innenrohrs (28) befestigt ist, und
eine elektrisch betreibbare Verstelleinheit (24), die an dem Außenrohr (26) des Stützrads (22) befestigt ist, wobei die Verstelleinheit (24) einen Elektromotor (36) sowie eine Energieversorgungseinrichtung (42) für den Elektromotor (36) aufweist, wobei der Elektromotor (36) mit dem Hubmechanismus (30) des Stützrads (22) wirkverbunden ist und die Energieversorgungseinrichtung (42) eine Halterung (44) und eine Energiequelle (46) aufweist, die wiederholbar lösbar in die Halterung (44) eingesetzt ist.

2. Stützradbaugruppe (20) nach Anspruch 1, wobei die Energiequelle (46) ein Akkumulator ist, insbesondere ein Akkumulator für ein batteriebetriebenes Elektrowerkzeug.

3. Stützradbaugruppe (20) nach Anspruch 1 der 2, wobei der Elektromotor (36) nur über die Energieversorgungseinrichtung (42) mit elektrischer Energie versorgt ist.

4. Stützradbaugruppe (20) nach einem der vorhergehenden Ansprüche, wobei die Verstelleinheit (24) frei von drahtlosen Kommunikationsschnittstellen ist, und/oder
wobei die Verstelleinheit (24) ein Motorgehäuse (40) aufweist, in dem der Elektromotor (36) aufgenommen ist, und wobei am Motorgehäuse (40) eine Bedienschnittstelle (41) für den Elektromotor (36) angebracht ist.

5. Stützradbaugruppe (20) nach einem der vorhergehenden Ansprüche, wobei die Halterung (44) am Außenrohr (26) des Stützrads (22) anliegt und die Energiequelle (46) an einer vom Außenrohr (26) abgewandten Seitenfläche der Halterung (44) eingesetzt ist, insbesondere eingeschoben ist,
insbesondere wobei die Halterung (44) mehrere Kontakte (50) aufweist, die elektrisch mit dem Elektromotor (36) verbunden sind, und die Energiequelle (46) mehrere Kontakte (48) aufweist, wobei die Kontakte (48) der Energiequelle (46) mit den Kontakten (50) der Halterung (44) in physischem Kontakt stehen, wenn die Energiequelle (46) in der Halterung (44) eingesetzt ist.

6. Stützradbaugruppe (20) nach einem der vorhergehenden Ansprüche, wobei die Verstelleinheit (24) ein Befestigungselement (70) umfasst, das an dem Außenrohr (26) befestigt ist, und wobei der Elektromotor (36) an dem Befestigungselement (70) abgestützt ist,
insbesondere wobei das Befestigungselement (70) auf das Außenrohr (26) geklemmt ist.

7. Stützradbaugruppe (20) nach einem der vorhergehenden Ansprüche, wobei der Elektromotor (36) Teil einer Motor-Getriebeeinheit (38) der Verstelleinheit (24) ist, die den Elektromotor (36) und ein Freilaufgetriebe (39) aufweist, wobei der Elektromotor (36) mittels des Freilaufgetriebes (39) mit dem Hubmechanismus (30) wirkverbunden ist.

8. Stützradbaugruppe (20) nach einem der vorhergehenden Ansprüche, wobei der Hubmechanismus (30) eine Gewindespindel (55) mit einer Gewindestange (56) und einer Spindelmutter (58) aufweist, wobei die Gewindestange (56) drehmomentübertragend mit dem Elektromotor (36) und/oder die Spindelmutter (58) mit dem Innenrohr (28) verbunden ist.

9. Stützradbaugruppe (20) nach einem der vorhergehenden Ansprüche, wobei die Verstelleinheit (24) eine Verlängerungswelle (60) aufweist, die drehmomentübertragend mit dem Elektromotor (36) verbunden ist, insbesondere wobei sich die Verlängerungswelle (60) axial durch den Elektromotor (36) erstreckt.

10. Stützradbaugruppe (20) nach Anspruch 9, sofern auf Anspruch 8 zurückbezogen, wobei die Gewindestange (56) an einem oberen axialen Ende des Innenrohrs (28) aus dem Innenrohr (28) herausragt und die Verlängerungswelle (60) drehmomentübertragend mit der Gewindestange (56) verbunden ist, insbesondere wobei die Verlängerungswelle (60) mit der Gewindestange (56) über eine erste Spannhülse (62) drehmomentübertragend verbunden ist.

11. Stützradbaugruppe (20) nach einem der Ansprüche 8 bis 10, wobei die Verlängerungswelle (60) ein oberes axiales Ende aufweist, das als Adapterstück (72) ausgebildet ist, insbesondere wobei eine manuelle Betätigungsvorrichtung (74) zur Betätigung des Hubmechanismus (30) drehmomentübertragend am Adapterstück (72) befestigt ist.

12. Stützradbaugruppe nach Anspruch 11, wobei eine Kurbel als Betätigungsvorrichtung (74) auf das Adapterstück (72) aufgesetzt ist, um die Kurbel drehmomentübertragend mit dem Hubmechanismus (30) zu verbinden.

13. Stützradbaugruppe (20) nach Anspruch 12, wobei die Kurbel wiederholbar lösbar, insbesondere werkzeugfrei lösbar, mittels einer dritten Spannhülse (76), oder mittels eines Rastmechanismus mit dem Adapterstück (72) drehmomentübertragend verbunden ist.

14. Stützradbaugruppe (20) nach Anspruch 12, wobei die Stützradbaugruppe (20) eine Stützradbaugruppe (20) für einen Fahrzeuganhänger (10) mit einem anhängerseitigen Stecker zur Herstellung einer elektrischen Verbindung mit einem Zugfahrzeug ist und das Adapterstück (72) als Anschlussbuchse für den anhängerseitigen Stecker ausgebildet ist.

15. Elektrisch betreibbare Verstelleinheit (24) für eine Stützradbaugruppe (20) für einen Fahrzeuganhänger gemäß einem der vorhergehenden Ansprüche mit einem Elektromotor (36) sowie einer Energieversorgungseinrichtung (42) für den Elektromotor (36).
